# EUROPÄISCHE PATENTSCHRIFT

(11) **EP 4 243 998 B1**
(45) Veröffentlichungstag und Bekanntmachung des Hinweises auf die Patenterteilung: **26.06.2024**
(21) Anmeldenummer: 21777995.8
(22) Anmeldetag: 15.09.2021
(51) Int. Cl.: F16C 19/38, F16C 35/063

(54) **LAGERBEFESTIGUNGSSYSTEM UND VERFAHREN ZUM AUFZIEHEN, HALTEN UND ABZIEHEN EINER LAGEREINHEIT AUF EINEM ZAPFEN EINER WALZE**
BEARING SECURING SYSTEM AND METHOD FOR MOUNTING, HOLDING AND REMOVING A BEARING UNIT ON A JOURNAL OF A ROLL
SYSTÈME DE FIXATION DE PALIER ET PROCÉDÉ DE MONTAGE, DE MAINTIEN ET DE DÉMONTAGE D'UNE UNITÉ DE PALIER SUR UN TOURILLON D'UN ROULEAU

(30) Priorität: 11.11.2020 DE 102020214139
(43) Veröffentlichungstag der Anmeldung: 20.09.2023
(73) Patentinhaber: SMS Group GmbH, 40237 Düsseldorf (DE)
(72) Erfinder: BECKER, Nesrin, 57076 Siegen (DE); BRAACH, Dennis, 57250 Netphen (DE); KRÖLLER, Stefan, 47223 Kreuztal (DE)
(74) Vertreter: Kross, Ulrich
(86) Internationale Anmeldenummer: PCT/EP2021/075335
(87) Internationale Veröffentlichungsnummer: WO 2022/100908

(56) Entgegenhaltungen:
- EP-A1- 1 977 838
- DE-A1- 2 035 698
- DE-A1-102016 214 011
- US-A- 3 799 636

## Beschreibung

Die Erfindung betrifft ein Lagerbefestigungssystem zum Aufziehen, Halten und Abziehen einer Lagereinheit auf einem konisch ausgebildeten Zapfen einer Walze, die zum Walzen eines Walzgutes vorgesehen ist. Weiterhin betrifft die vorliegende Erfindung eine Baugruppe umfassend eine mit dem erfindungsgemäßen Lagerbefestigungssystem verbundene Lagereinheit. In einem weiteren Aspekt betrifft die vorliegende Erfindung zudem ein Verfahren zum Aufziehen sowie ein Verfahren zum Abziehen der Lagereinheit auf den bzw. von dem konisch ausgebildeten Zapfen der Walze.

Ähnliche Vorrichtungen und Verfahren sind im Stand der Technik grundsätzlich bekannt, so z. B. aus der US-Patentschrift US 5,029,461 sowie aus der deutschen Offenlegungsschrift DE 10 2016 214 011 A1. In beiden Druckschriften sind im Wesentlichen doppeltwirkende hydraulische Kolben-Zylindereinheiten beschrieben mit einem ringförmigen Zylinder und einem koaxial dazu gelagerten ringförmigen Kolben, wobei der Kolben relativ zu dem Zylinder in axialer Richtung verschiebbar ist, so dass hierdurch eine Lagereinheit auf einem Zapfen einer Walze aufgezogen, gehalten und abgezogen werden kann.

Nachteilig bei den aus dem Stand der Technik bekannten Konstruktionen ist, dass diese in axialer Richtung verhältnismäßig lang bauen. Insbesondere bei bestehenden Altanlagen ist typischerweise in axialer Richtung nur wenig Bauraum vorhanden und die Modernisierung eines bekannten Lagerbefestigungssystems gestaltet sich deshalb regelmäßig schwierig.

Der Erfindung liegt daher die Aufgabe zugrunde, ein bekanntes Lagerbefestigungssystem zum Aufziehen, Halten und Abziehen einer Lagereinheit auf einem konisch ausgebildeten Zapfen einer Walze und/oder eine bekannte Baugruppe sowie bekannte Verfahren zum Aufziehen oder Abziehen der Lagereinheit dahingehend weiterzubilden, dass das Lagerbefestigungssystem und/oder die Baugruppe in axialer Richtung kürzer baut und die Verfahren zum Aufziehen und Abziehen der Lagereinheit vereinfacht werden.

Diese Aufgabe wird erfindungsgemäß durch ein Lagerbefestigungssystem mit den Merkmalen des Patentanspruchs 1, einer Baugruppe mit den Merkmalen des Patentanspruchs 10, einem Verfahren mit den Merkmalen des Patentanspruchs 14 sowie einem Verfahren mit den Merkmalen des Patentanspruchs 16 gelöst.

In einem ersten Aspekt betrifft die vorliegende Erfindung ein Lagerbefestigungssystem gemäss Anspruch 1.

Die Druckbeaufschlagung des Kolbens über die erste und/oder die zweite Kammer erfolgt vorteilhafterweise hydraulisch mittels eines hydraulischen Fluids, insbesondere eines Hydrauliköls. Derartige Fluide sind dem Fachmann grundsätzlich bekannt.

Durch die konstruktive Umgestaltung und geänderte Funktionszuweisung mittels eigenständiger Formgebung der jeweiligen Komponenten des erfindungsgemäßen Lagerbefestigungssystems, insbesondere durch die koaxiale Anordnung dieser zueinander konnte eine besonders kompakte Bauweise des Lagerbefestigungssystems realisiert werden, das in axialer Richtung kürzer baut. Das erfindungsgemäßen Lagerbefestigungssystem erlaubt daher die Modernisierung von Altanlagen unter Beibehaltung der existierenden Walze, so dass kostenintensive Neubeschaffungen oder aufwendige mechanische Bearbeitungen der Walzen eingespart werden können.

Ein wesentlicher Vorteil den das erfindungsgemäße Lagerbefestigungssystem, sofern es in Form der Baugruppe bereitgestellt wird, aufweist ist die maximale Erhöhung der Arbeitssicherheit. Im Gegensatz zu den aus dem Stand der Technik bekannten mechanischen Systemen muss das erfindungsgemäße Lagerbefestigungssystem nicht separat mittels eines Krans zunächst angehängt und sodann zu der Baugruppe aufwendig montiert bzw. von dieser wieder demontiert werden. Insbesondere zum Befestigen und Lösen der gesamten Baugruppe auf bzw. von dem Zapfen der Walze entfällt das Anziehen bzw. Losziehen der Ringmutter mittels Drahtseil und Kran.

Um einen ausreichend hohen Druck zu generieren, ist vorteilhafterweise vorgesehen, dass der in dem Innenraum des Zylindergehäuses axial verschiebbar gelagerte ringförmig ausgebildete Kolben zumindest eine, oder in axialer Richtung mehrere beabstandet zueinander angeordnete, Innenringdichtung(en) zum Abdichten des Kolbens gegenüber der inneren Mantelwand des Zylindergehäuses und zumindest eine, oder in axialer Richtung mehrere beabstandet zueinander angeordnete, Außenringdichtung(en) zum Abdichten des Kolbens gegenüber der äußeren Mantelwand des Zylindergehäuses aufweist. Vorzugsweise weist der Kolben hierzu jeweils eine umfangsseitig verlaufende Nut auf, in der die Dichtung angeordnet sein kann. In einer alternativen und/oder ergänzenden Ausgestaltung können die Dichtungen auch in einer in der inneren oder äußeren Mantelwand angeordneten umfangsseitig verlaufenden Nut positioniert sein.

Das Zylindergehäuse des erfindungsgemäßen Lagerbefestigungssystems ist einseitig über ein Bodenelement verschlossen, wobei dieses mit den beiden Mantelwänden einstückig ausgebildet ist. Im Querschnitt weist das Zylindergehäuse daher ein U-förmiges Profil auf. Dem Bodenelement axial gegenüberliegend ist der Innenraum des Zylindergehäuses über einen Zylinderabschlussdeckel verschlossen, der den Kolben koaxial umgibt. In diesem Zusammenhang ist bevorzugt vorgesehen, dass der Zylinderabschlussdeckel an einem freien Ende, insbesondere der Stirnseite, der äußeren Mantelwand des Zylindergehäuses angeordnet und mit diesem, besonders bevorzugt lösbar, beispielsweise über eine Schraubverbindung, verbunden ist. Alternativ kann der Zylinderabschlussdeckel über eine stoffschlüssige Verbindung, beispielsweise eine Klebeverbindung, mit dem Zylindergehäuse verbunden werden.

In einer besonders bevorzugten Ausführungsvariante kann der ringförmige Zylinderabschlussdeckel auch Bestandteil des Zylindergehäuses und bevorzugt mit diesem einstückig ausgebildet sein. Ein derart ausgebildetes Zylindergehäuse ist beispielsweise mittels der 3D-Drucktechnik herstellbar.

Um auch den koaxial um den Kolben angeordneten ringförmigen Zylinderabschlussdeckel gegenüber dem axial beweglichen Kolben, insbesondere gegen die Kolbenstange, abzudichten, ist vorteilhafterweise an der Innenseite des Zylinderabschlussdeckels zumindest eine in zumindest einer Nut angeordnete Ringdichtung vorgesehen. In einer alternativen oder ergänzenden Ausführungsvariante umfasst der Kolben, insbesondere die Kolbenstange an seiner Außenseite die zumindest eine in der zumindest einen Nut angeordnete Ringdichtung zum Abdichten gegen den Zylinderabschlussdeckel. Der Zylinderabschlussdeckel und/oder der Kolben, insbesondere die Kolbenstange, können auch mehrere in axialer Richtung und sodann zueinander beabstandete Ringdichtungen aufweisen, um die Dichtwirkung für den Innenraum zu erhöhen.

In einer vorteilhaften Ausführungsvariante umfasst die Ringmutter ein zylinderförmiges Element, das sich axial in Richtung des ersten Endes des Zylindergehäuses erstreckt und die äußere Mantelwand des Zylindergehäuses außenseitig zumindest teilweise koaxial umgibt. Die axiale Erstreckung ist dabei derart dimensioniert, dass das zylinderförmige Element bei jeder möglichen Position der Ringmutter innerhalb des Lagerbefestigungssystems die äußere Mantelwand des Zylindergehäuses außenseitig zumindest teilweise koaxial umgibt.

Die Druckkraft des Kolbens kann grundsätzlich über dessen am freien Ende angeordnete Stirnseite an die Lagereinheit übertragen werden. In einer vorteilhaften Ausführungsvariante umfasst die Lagereinheit jedoch einen am zweiten Ende des Zylindergehäuses angeordneten Druckring, über den die Druckkraft des Kolbens auf die Lagereinheit übertragbar ist. Der Druckring kann in Form eines separaten Bauteils und/oder als Bestandteil des Kolbens, beispielsweise einteilig mit diesem, ausgebildet sein. Bevorzugt ist der Druckring als separates Bauteil ausgebildet. Ein in dieser Form ausgebildeter Druckring kann als Verschleißteil besonders kostengünstig ausgetauscht werden.

Es ist bevorzugt vorgesehen, dass der Koppelmechanismus in Form eines Bajonettsystems ausgebildet ist.

Gemäß einem zweiten Aspekt betrifft die vorliegende Erfindung zudem eine Baugruppe umfassend das erfindungsgemäße Lagerbefestigungssystem und eine mit dem Lagerbefestigungssystem, vorzugsweise kraft- und/oder formschlüssig, verbundene Lagereinheit. Die Lagereinheit kann eine Axiallagereinheit mit einem Abziehring umfassen, über den die Lagereinheit für den Abziehprozess mittels eines Koppelelements mit der Ringmutter temporär koppelbar ist. Vorteilhafterweise umfasst der Abziehring hierzu umfangsseitig zumindest zwei, vorzugsweise mehrere, radiale Schlitze, in die die Koppelelemente, beispielsweise in Form von Abziehblechen, radial einschiebbar sind. Weiterhin kann die Lagereinheit einen Druckschulterring, eine Zapfen-Lager-Buchsen-Einheit sowie ggf. ein Einbaustück umfassen.

In einem weiteren Aspekt betrifft die vorliegende Erfindung zudem ein Verfahren zum Aufziehen von zumindest einer Lagereinheit auf einem konisch ausgebildeten Zapfen einer Walze mittels des erfindungsgemäßen Lagerbefestigungssystems. Das Verfahren umfasst dabei die folgenden Schritte. In einem Schritt wird die Lagereinheit vormontiert und mit dem erfindungsgemäßen vormontierten Lagerbefestigungssystem zu einer Baugruppe montiert. Alternativ kann die erfindungsgemäße Baugruppe bereitgestellt werden, die aus Gründen der Arbeitssicherheit besonders bevorzugt ist. Sodann wird diese ausgerichtet und auf den Zapfen der Walze aufgeschoben. In einem nachfolgenden Schritt wird das Lagerbefestigungssystem mit dem Zapfen der Walze gekoppelt, so dass dieses verschiebesicher mit dem Zapfen der Walze verbunden wird. Anschließend wird der Kolben mit einem Aufziehdruck beaufschlagt, derart, dass dieser, ggf. über den Druckring, die Lagereinheit auf den konisch ausgebildeten Zapfen der Walze aufzieht.

In einer vorteilhaften Ausführungsvariante kann die Ringmutter bei noch anhaltender Druckbeaufschlagung des Kolbens in Richtung des ersten Endes des Zylindergehäuses ggf. bis zu einer Anschlagsfläche des Zylinderabschlussdeckels zurückgedreht und anschließend drehfest, beispielsweise über Sicherungssegmente, gesichert werden. In einem letzten vorteilhaften Schritt wird der Kolben sodann druckentlastet.

In einem weiteren Aspekt betrifft die vorliegende Erfindung zudem ein Verfahren zum Abziehen zumindest einer auf einem konisch ausgebildeten Zapfen einer Walze installierten Lagereinheit mittels des erfindungsgemäßen Lagerbefestigungssystems, wobei dieses mit der Lagereinheit als Baugruppe auf dem Zapfen der Walze installiert ist, derart, dass die Lagereinheit von dem erfindungsgemäßen Lagerbefestigungssystem in Position gehalten wird, aufweisend die folgenden Schritte. In einem ersten Schritt wird der Kolben mit einem Fixierdruck beaufschlagt, derart, dass dieser, ggf. über den Druckring, die Lagereinheit auf dem konisch ausgebildeten Zapfen der Walze fixiert. Sodann wird die Ringmutter ggf. entsichert und in Richtung der Lagereinheit ggf. bis zu einer Anschlagsfläche dieser verdreht. In einem nachfolgenden Schritt wird der Kolben druckentlastet, indem die Druckbeaufschlagung beendet wird. Anschließend kann ggf. das Lagerbefestigungssystem von dem Zapfen der Walze entkoppelt werden. Sodann wird die Lagereinheit über ein Koppelelement mit der Ringmutter des Lagerbefestigungssystems gekoppelt. Hierzu ist vorteilhafterweise vorgesehen, dass die Lagereinheit eine Axiallagereinheit mit einem Abziehring umfasst, über den die Lagereinheit mittels des Koppelelements mit der Ringmutter temporär koppelbar ist. Der Abziehring umfasst hierzu umfangsseitig zumindest zwei, vorzugsweise mehrere, radiale Schlitze, in die die Koppelelemente, beispielsweise in Form von Abziehblechen, radial einschiebbar sind. Anschließend kann der Kolben mit einem Abziehdruck beaufschlagt werden derart, dass das Lagerbefestigungssystem die Lagereinheit über die Koppelverbindung der Ringmutter mit der Lagereinheit von dem Zapfen der Walze abzieht. Sofern das Lagerbefestigungssystem nicht schon in einem vorherigen Prozessschritt von dem Zapfen entkoppelt worden ist, so erfolgt dies vorteilhafterweise in einem letzten Schritt.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren, ohne den durch die Ansprüche definierten Schutzumfang der Erfindung zu verlassen.

Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Figuren 1 bis 11: eine erste Ausführungsvariante des erfindungsgemäßen Lagerbefestigungssystems in einer Schnittdarstellung;
- Figuren 1 bis 6: eine Ausführungsvariante des erfindungsgemäßen Verfahrens zum Aufziehen einer Lagereinheit auf einem konisch ausgebildeten Zapfen einer Walze mittels des Lagerbefestigungssystems;
- Figuren 7 bis 11: eine Ausführungsvariante des erfindungsgemäßen Verfahrens zum Abziehen einer Lagereinheit von dem konisch ausgebildeten Zapfen einer Walze mittels des Lagerbefestigungssystems; und
- Figur 12: eine zweite Ausführungsvariante des erfindungsgemäßen Lagerbefestigungssystems.

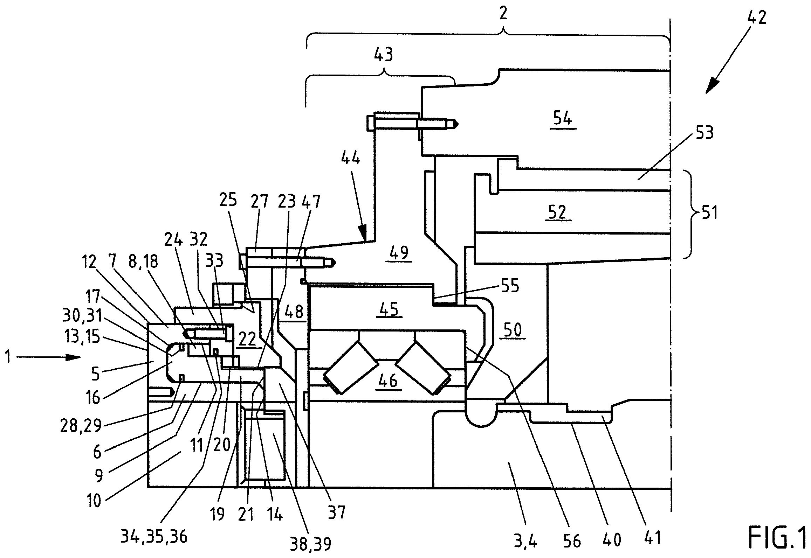

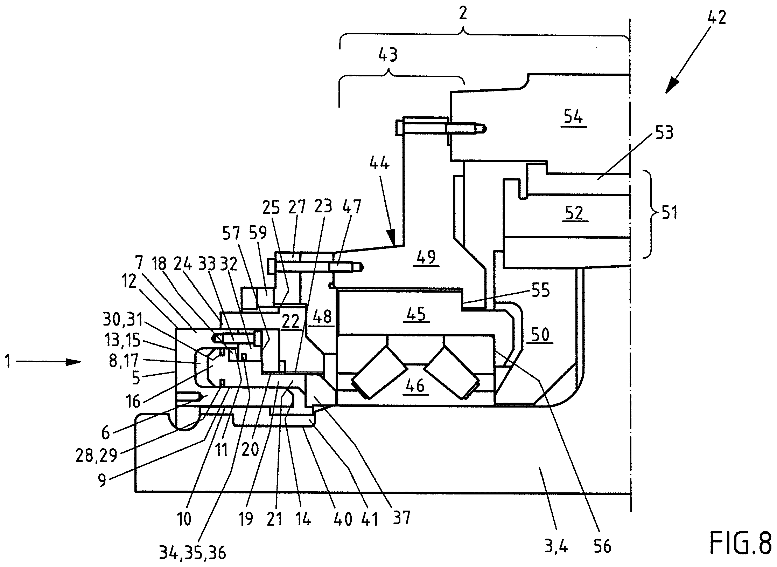

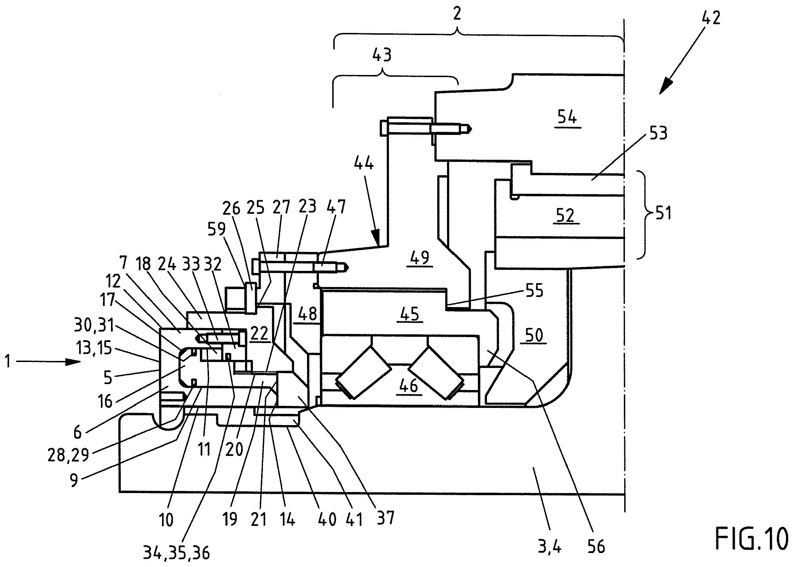

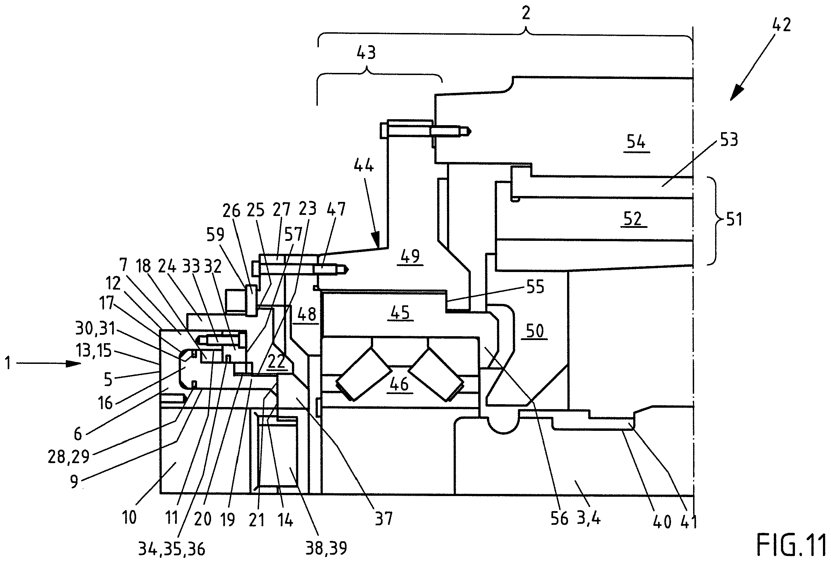

In den Figuren 1 bis 11 ist eine erste Ausführungsvariante des erfindungsgemäßen Lagerbefestigungssystems 1 zum Aufziehen, Halten und Abziehen von zumindest einer Lagereinheit 2 auf einem konisch ausgebildeten Zapfen 3 einer Walze 4 gezeigt. Bei der Walze 4 kann es sich beispielsweise um eine Stützwalze handeln, wie sie typischerweise in Walzstraßen zum Einsatz kommt.

Zu diesem Zwecke umfasst das Lagerbefestigungssystem 1 ein ringförmig ausgebildetes Zylindergehäuse 5 mit einem von einer inneren Mantelwand 6 und von einer äußeren Mantelwand 7 begrenztem ringförmigen Innenraum 8. Jede der Mantelwände 6, 7 weist jeweils eine Innenseite und eine Außenseite auf. Die Innenseite der inneren Mantelwand 6 ist in den Figuren mit der Bezugsziffer 9, die Außenseite der inneren Mantelwand 6 ist mit der Bezugsziffer 10 versehen. Die Innenseite der äußeren Mantelwand 7 ist in den Figuren mit der Bezugsziffer 11, die Außenseite der äußeren Mantelwand 7 ist mit der Bezugsziffer 12 versehen. Ferner weist das Zylindergehäuse 5 ein erstes und ein axial gegenüberliegend angeordnetes zweites Ende 13, 14 auf.

Wie anhand der Darstellungen in den Figuren 1 bis 11 erkennbar, ist der Innenraum 8 zum ersten Ende 13 hin über ein ringförmiges Bodenelement 15 verschlossen, wobei das Bodenelement 15 sowie die beiden Mantelwände 6, 7 vorliegend einstückig ausgebildet sind.

In dem Innenraum 8 des Zylindergehäuses 5 ist ein axial verschiebbar gelagerter ringförmig ausgebildeter Kolben 16 angeordnet, der den Innenraum 8 des Zylindergehäuses 5 in eine erste und eine zweite Kammer 17, 18 unterteilt, über die der Kolben 16 jeweils mit einem hydraulischen Druck beaufschlagbar ist. Über die Druckbeaufschlagung des Kolben 16 mit einem hydraulischen Fluid, insbesondere einem Hydrauliköl, ist die gesamte Lagereinheit 2 auf den konisch ausgebildeten Zapfen 3 der Walze 4 auf- oder abziehbar. Hierzu weist die jeweilige erste und zweite Kammer 17, 18 einen entsprechenden hydraulischen Anschluss auf (nicht dargestellt), über den die beiden Kammern 17, 18 mit einem Hydraulikaggregat (nicht dargestellt) verbindbar sind.

Wie weiterhin anhand der Darstellungen in den Figuren 1 bis 11 erkennbar, weist der Kolben 16 eine sich in Richtung des zweiten Endes 14 des Zylindergehäuses 5 axial erstreckende Kolbenstange 19 mit einem Außengewinde 20 auf, das sich über einen Teil seiner axialen Länge und bis zu seinem freien Ende 21 erstreckt. Der gesamte Kolben 16 ist vorliegend derart dimensioniert, dass sein freies Ende 21 in der in Figur 1 gezeigten Ausgangsstellung bündig mit der Stirnseite der inneren Mantelwand 6 abschließt.

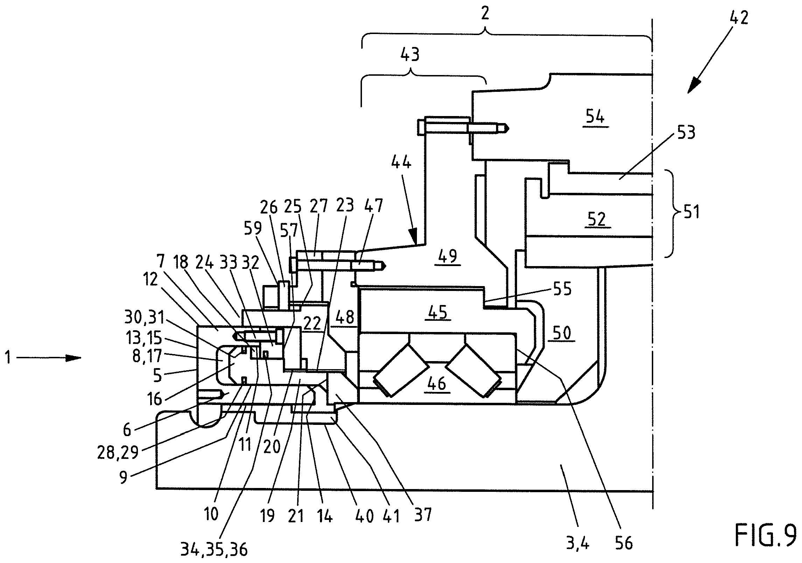

Koaxial zu dem ringförmigen Kolben 16 weist das Lagerbefestigungssystem 1 zudem eine Ringmutter 22 mit einem Innengewinde 23 auf, das mit dem Außengewinde 20 des ringförmigen Kolbens 16, alternativ umgekehrt, in Eingriff steht, derart, dass die Ringmutter 22 über eine Druckbeaufschlagung des Kolbens 16 axial verfahrbar bzw. durch die axiale Verschiebung des Kolbens 16 von diesem zeitgleich mitnehmbar ist. Die Ringmutter 22 weist ferner ein zylinderförmiges Element 24 auf, das sich axial in Richtung des ersten Endes 13 des Zylindergehäuses 5 erstreckt und die äußere Mantelwand 7 des Zylindergehäuses 5 außenseitig zu einem Teil ihrer axialen Erstreckung koaxial umgibt. Weiterhin umfasst die Ringmutter 22 außenseitig eine flanschartige Ringfläche 25 auf, die über ein Koppelelement 26 (Fig. 9) mit einem Abziehring 27 der Lagereinheit 2 koppelbar ist.

Der in dem Innenraum 8 des Zylindergehäuses 5 axial verschiebbar gelagerte ringförmig ausgebildete Kolben 16 umfasst in der vorliegend dargestellten Ausführungsvariante eine Innenringdichtung 28, die in einer umfangsseitig verlaufenden Nut 29 des Kolbens 16 angeordnet ist. Über die Innenringdichtung 28 wird der Kolben 16 gegenüber der inneren Mantelwand 6, insbesondere gegenüber der Innenseite 9 der inneren Mantelwand 6 des Zylindergehäuses 5 abgedichtet. Um den Kolben 16 auch gegenüber der äußeren Mantelwand 7, insbesondere gegenüber der Innenseite 11 der äußeren Mantelwand 7 des Zylindergehäuses 5 abzudichten, weist dieser zudem eine Außenringdichtung 30 auf, die ebenfalls in einer umfangsseitig verlaufenden Nut 31 des Kolbens 16 angeordnet ist.

Wie bereits vorhergehend erläutert, ist der Innenraum 8 zu seinem ersten distalen Ende 13 hin über das ringförmige Bodenelement 15 verschlossen. An seinem axial gegenüberliegenden Ende ist der Innenraum 8 des Zylindergehäuses 5 in der vorliegend dargestellten Ausführungsvariante von einem ringförmigen Zylinderabschlussdeckel 32 verschlossen, das an dem freien Ende bzw. der Stirnseite der äußeren Mantelwand 7 des Zylindergehäuses 5 über eine Schraubverbindung 33 lösbar befestigt ist. Wie den Figuren 1 bis 11 entnehmbar, ist auch der Zylinderabschlussdeckel 32 an seiner Innenseite 34, d.h. der zur Kolbenstange 19 gerichteten inneren Umfangsfläche, über eine in einer Nut 35 angeordnete Ringdichtung 36 gegen den Kolben 16, insbesondere gegen den Außengewinde 20 freien Teilbereich der Kolbenstange 19 abgedichtet. Wie anhand der unterschiedlichen Darstellungen erkennbar, weist der Außengewinde 20 freie Teilbereich der Kolbenstange 19 einen im Vergleich zu dem Außengewinde 20 Teilbereich größeren Durchmesser auf.

Weiterhin umfasst das Lagerbefestigungssystem 1 in der vorliegend dargestellten Ausführungsvariante einen Druckring 37 auf, der in Form eines separaten Bauteils ausgebildet ist. Grundsätzlich kann dieser auch ein Bestandteil des Kolbens 16 selbst und mit diesem sodann einstückig ausgebildet sein. Über den Druckring 37 ist die Druckkraft des Kolbens 16 auf die Lagereinheit 2 übertragbar, wie dies im Weiteren noch näher dargestellt wird.

An der Außenseite 10 der inneren Mantelwand 6 umfasst das Zylindergehäuse 5 einen Koppelmechanismus 38, über den das Zylindergehäuse 5 verschiebesicher mit dem Zapfen 3 der Walze 4 koppelbar ist. Dieser ist vorliegend in Form eines Bajonettsystems ausgebildet, welches ein an der Außenseite 10 der inneren Mantelwand 6 angeordnetes Bajonettelement 39 sowie einen in einer Vertiefung 40 des Zapfens 3 angeordneten Bajonettring 41 umfasst.

In den Figuren 1 bis 11 ist das in der vorliegend dargestellten Ausführungsvariante gezeigte Lagerbefestigungssystem 1 mit der Lagereinheit 2 verbunden und bildet eine Baugruppe 42 aus, die gemäß der Darstellung in Figur 1 auf den konisch ausgebildeten Zapfen 3 der Walze 4 aufgezogen werden soll.

Die Lagereinheit 2 umfasst in der vorliegend dargestellten Ausführungsvariante eine Axiallagereinheit 43, die den Abziehring 27, einen zweiteilig ausgebildeten Abschlussdeckel 44, ein Axiallagergehäuse 45 sowie ein Axiallager 46 umfasst. Der Abziehring 27 ist über eine Schraubverbindung 47 mit einem ersten Element 48, das wiederum über diese Schraubverbindung 47 mit einem zweiten Element 49 des Abschlussdeckels 44 verbunden ist.

Weiterhin umfasst die Lagereinheit 2 einen Druckschulterring 50, eine Zapfen-Lager-Buchsen-Einheit 51, die eine Zapfenbuchse 52 und eine Lagerbuchse 53 aufweist, sowie ein Einbaustück 54.

Das Einbaustück 54 dient vorliegend als Lagergehäuse für die Walze 4 und ist typischerweise in einem Walzenständer eines Walzgerüstes, hier nicht gezeigt, anordenbar. Das Einbaustück 54 hat einen zylinderförmigen Aufnahmeraum, in welchem die zylinderförmig ausgebildete Lagerbuchse 53 als Verschleißteil angeordnet ist und das Einbaustück 54 von innen auskleidet. Die Lagerbuchse 53 bildet wiederum einen zylinderförmigen Aufnahmeraum zur Aufnahme der Zapfenbuchse 52, die walzenseitig konisch ausgebildet ist und ebenfalls ein Verschleißteil bildet. Zwischen der Lagerbuchse 53, welche im Walzbetrieb stillsteht, und der im Walzbetrieb zusammen mit dem Zapfen 3 rotierenden Zapfenbuchse 52 ist typischerweise ein Schmierfilm ausgebildet. Derartige Lager sind dem Fachmann daher auch als Ölfilmlager bekannt.

Das besagte Axiallager 46 ist - in radialer Richtung gesehen - zwischen dem Zapfen 3 und dem Abschlussdeckel 44 angeordnet. In radialer Richtung zwischen dem Axiallager 46 und dem zweiten Element 49 des Abschlussdeckels 44 ist vorliegend das Axiallagergehäuse 45 angeordnet, welches das Axiallager 46 schützend umgibt. Das zweite Element 49 des Abschlussdeckels 44 weist an seiner dem Zapfen 3 zugewandten Seite einen radial nach innen auskragenden Flansch 55 auf mit welchem dieser in Figur 1 das Axiallagergehäuse 45 übergreift. Analog weist das Axiallagergehäuse 45 an seiner dem Zapfen 3 zugewandten Seite einen ebenfalls radial nach innen gerichteten bzw. kragenden Flansch 56 auf, mit welchem das Axiallagergehäuse 45 das Axiallager 46 übergreift. Bei dieser in Figur 1 gezeigten Konstellation übergreift der Abschlussdeckel 44 das Axiallager 46 somit nur indirekt. In einer alternativen Ausführungsvariante ohne ein Axiallagergehäuse kann der Abschlussdeckel einen direkten Kontakt mit dem Axiallager haben.

Eine formschlüssige Verbindung zwischen dem Kolben 16 und der Zapfenbuchse 52 wird vorliegend über den Druckring 37, das Axiallager 46 und den Druckschulterring 50, welcher das Axiallager 46 formschlüssig mit der Zapfenbuchse 52 verbindet, erzielt. Wenn zusätzlicher Platz in axialer Richtung eingespart werden soll, kann der Druckring 37 auch entfallen. Der in Figur 1 gezeigte Spalt zwischen dem Druckring 37 und dem Axiallager 46 beschreibt einen Anfangszustand, in dem der Formschluss noch nicht aufgebaut ist. Sollte kein Axiallager 46 vorhanden sein, so kann der Formschluss auch direkt zwischen dem Kolben 16 und dem Druckschulterring 50 oder der Zapfenbuchse 52 - optional auch zusätzlich über den zwischengeschalteten Druckring 37 - realisiert sein.

Nachfolgend wird anhand der Figuren 1 bis 6 eine Ausführungsvariante des erfindungsgemäßen Verfahrens zum Aufziehen der Lagereinheit 2 auf dem konisch ausgebildeten Zapfen 3 der Walze 4 mittels des Lagerbefestigungssystems 1 erläutert.

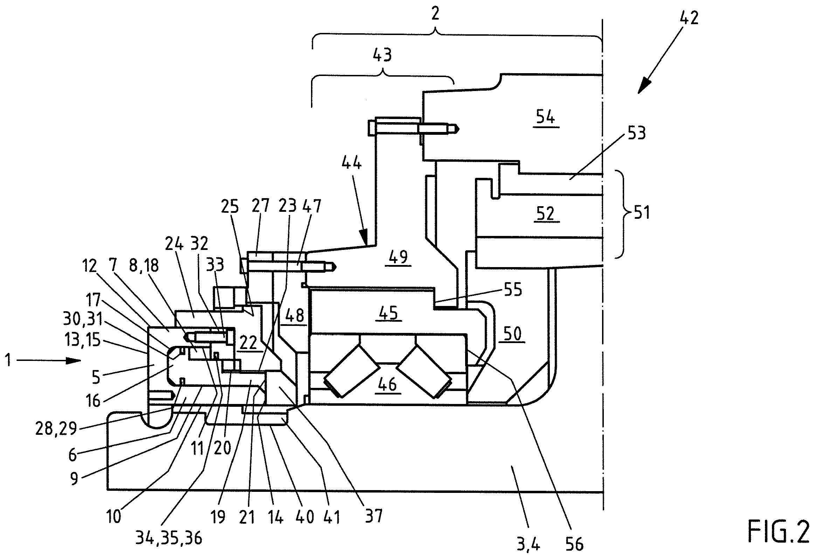

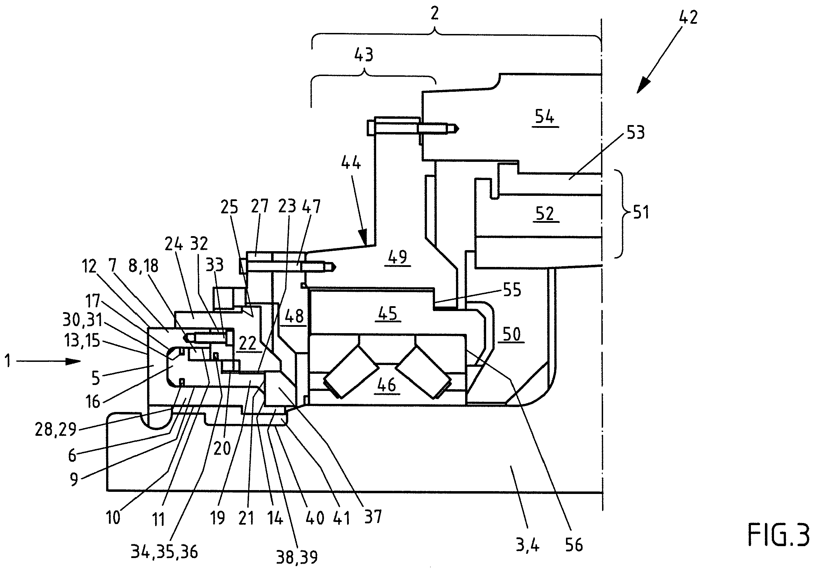

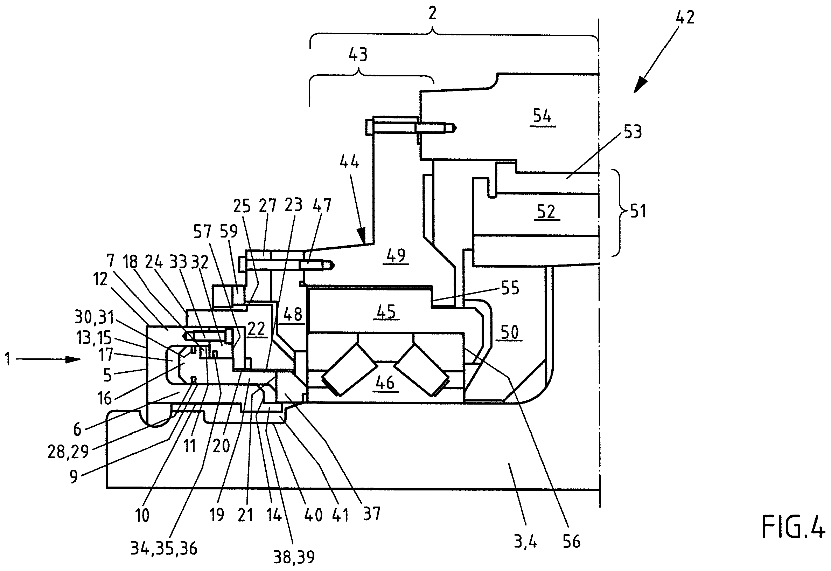

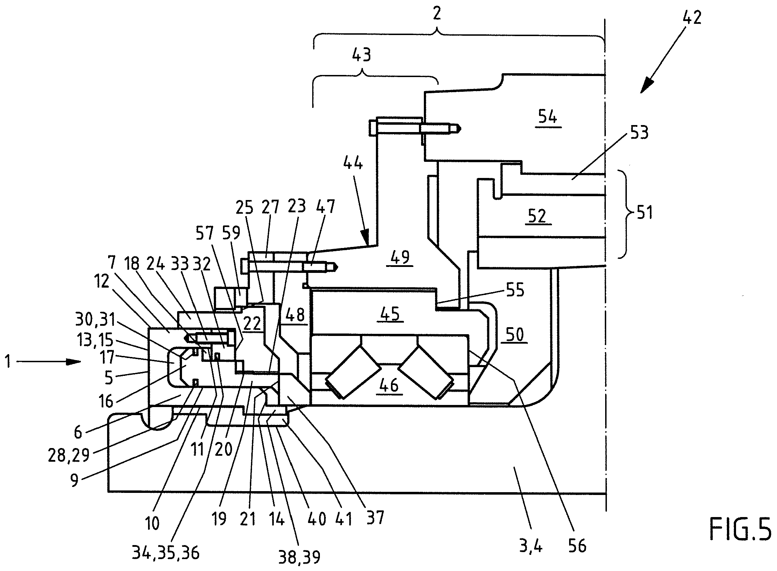

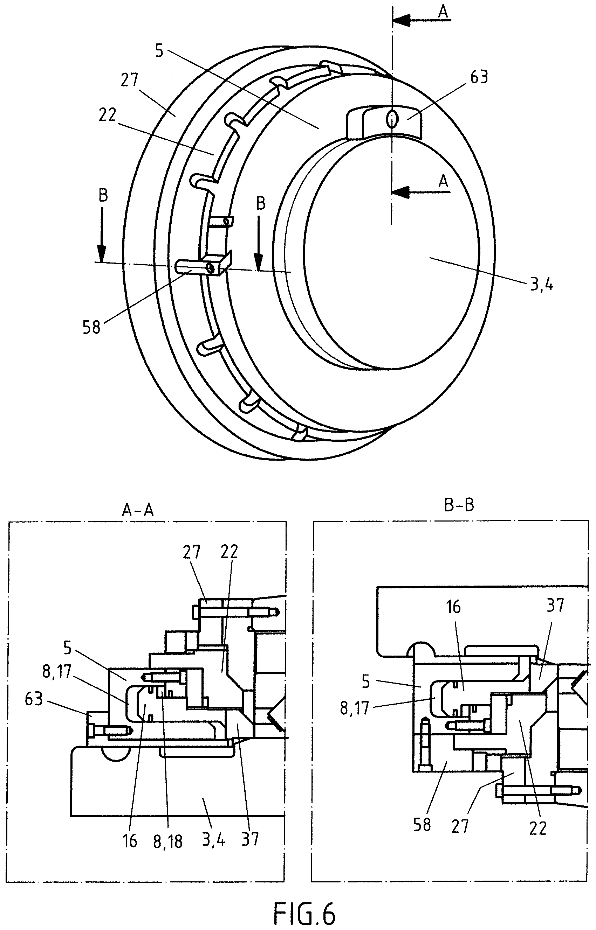

In einem ersten Schritt wird die Lagereinheit 2 vormontiert und mit dem ebenfalls vormontierten Lagerbefestigungssystem 1 zu einer Baugruppe 42 verbunden. Diese wird sodann ausgerichtet, so dass der Anfangszustand, wie in Figur 1 gezeigt, erreicht wird. Sodann wird die gesamte Baugruppe 42 auf den Zapfen 3 der Walze 4 aufgeschoben, wie dies in Figur 2 gezeigt ist. Anhand der Figur 2 ist erkennbar, dass das Lagerbefestigungssystem 1 in diesem aufgeschobenen Zustand oberhalb des Bajonettrings 41 positioniert ist, derart, dass das Bajonettelement 39 mit dem Bajonettring 41 in Eingriff bringbar ist. In einem nachfolgenden Schritt wird das Lagerbefestigungssystem 1 sodann über das Bajonettsystem mit dem Zapfen 3 der Walze 4 gekoppelt, indem das Lagerbefestigungssystem 1 um einen spezifischen Winkel im Uhrzeigersinn gedreht wird. Hierbei greift das Bajonettelement 39 in den Bajonettring 41 ein, wie dies anhand der Darstellung in Figur 3 erkennbar ist. Über das Koppeln des Lagerbefestigungssystems 1 mit dem Zapfen 3 der Walze 4 wird erzielt, dass das Lagerbefestigungssystem 1 axial in seiner Lage fixiert wird. Zum Aufziehen der Lagereinheit 2 auf den konisch ausgebildeten Zapfen 3 wird ein Hydraulikaggregat (nicht dargestellt) angeschlossen, über das der Kolben 16 über die erste Kammer 17 mit einem hydraulischen Druck beaufschlagt werden kann. Das Beaufschlagen des Kolbens 16 mit dem hydraulischen Druck generiert einen Aufziehdruck, derart, dass dieser über den zuvor erläuterten Formschluss die Lagereinheit 2 auf den konisch ausgebildeten Zapfen 3 aufzieht, derart, dass zwischen dem konischen Zapfen 3 und der Zapfenbuchse 52 ein Formschluss und eine Pressverbindung gebildet wird (Fig. 3 und 4). Gemäß der vorliegend dargestellten Ausführungsvariante des Verfahrens wird sodann, bei noch anhaltender Druckbeaufschlagung des Kolbens 16, die Ringmutter 22 in Richtung des ersten Endes 13 des Zylindergehäuses 5 bis zu einer Anschlagsfläche 57 des Zylinderabschlussdeckels 32 zurückgedreht (Fig. 5), und anschließend mittels Sicherungssegmenten 58 drehfest gesichert (Fig. 6). Die Ringmutter 22 fixiert somit die axiale Position des Kolbens 16, so dass dieser in einem letzten Schritt druckentlastet wird. Sodann wird ein Haltesegment 63 wird in die Aussparungen des Hydraulikzylinders 5 eingeschoben und festgeschraubt. Somit fixiert das Haltesegment 63 den Hydraulikzylinder 5 gegen verdrehen. Die Lagereinheit 2 bzw. die gesamte Baugruppe 42 ist auf dem konischen Zapfen 3 der Walze 4 fixiert und kann beispielsweise in einen Walzenständer (nicht dargestellt) eingebaut werden.

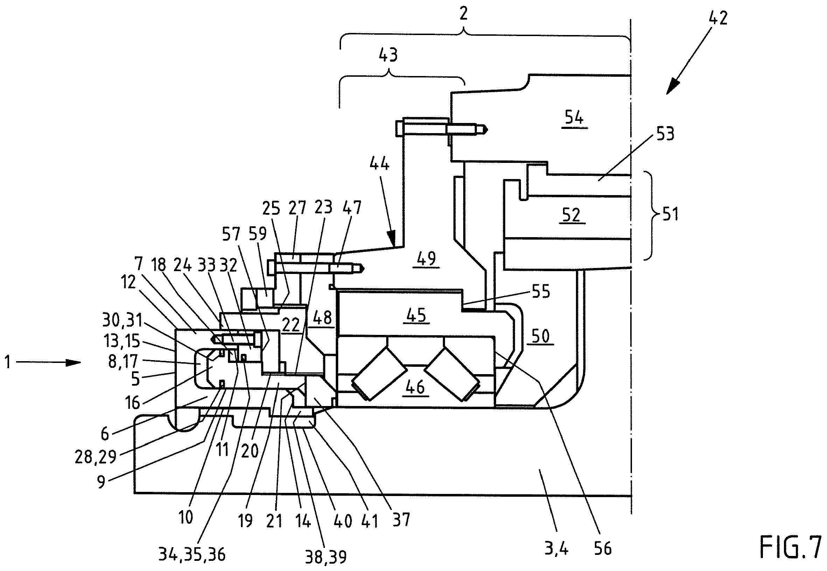

Nachfolgend wird anhand der Figuren 7 bis 11 eine Ausführungsvariante des erfindungsgemäßen Verfahrens zum Abziehen der Lagereinheit 2 von dem konisch ausgebildeten Zapfen 3 der Walze 4 mittels des Lagerbefestigungssystems 1 erläutert. Als Ausgangssituation ist bei diesem Verfahren von dem in den Figuren 5 und 6 gezeigten Zustand auszugehen, in dem die Lagereinheit 2 von dem Lagerbefestigungssystem 1 in Position gehalten wird.

In einem ersten Schritt wird zunächst das Hydraulikaggregat angeschlossen, so dass der Kolben 16 erneut über die erste Kammer 17 mit einem hydraulischen Druck beaufschlagt werden kann. Das Beaufschlagen des Kolbens 16 mit dem hydraulischen Druck generiert einen Fixierdruck, derart, dass dieser über den Formschluss die Lagereinheit 2 weiterhin auf den konisch ausgebildeten Zapfen 3 der Walze 4 fixiert. Hierdurch kann in einem nächsten Schritt die Ringmutter 22 zunächst durch Entnahme der Sicherungssegmente 58 entsichert und anschließend in Richtung der Lagereinheit 2, insbesondere bis zum Anschlag an das erste Element 48 des Abschlussdeckels 44 verdreht werden (Fig. 7). Sodann wird der Kolben 16 druckentlastet, indem die Druckbeaufschlagung über das Hydraulikaggregat (nicht dargestellt) beendet wird. In einem nachfolgenden Schritt wird das Lagerbefestigungssystem 1 von dem Zapfen 3 der Walze 4 entkoppelt, indem die Bajonettverbindung wieder gelöst wird. Das Abziehen der Lagereinheit 2 von dem Zapfen 3 erfolgt über einen Formschluss zwischen der Ringmutter 22, insbesondere der flanschartigen Ringfläche 25 und dem Abziehring 27. Dieser weist hierzu umfangsseitig zwei radiale Schlitze 59 auf, in die die Koppelelemente 26 radial einschiebbar sind und den Formschluss ausbilden. Die Koppelelemente 26 sind vorliegend in Form von Abziehblechen ausgebildet. Nach dem Koppeln der Lagereinheit 2 über die Koppelelemente 26 mit der Ringmutter 22 bzw. der flanschartigen Ringfläche 25, wird sodann das Hydraulikaggregat (nicht dargestellt) angeschlossen, über das der Kolben 16 über die zweite Kammer 18 mit einem hydraulischen Druck beaufschlagt werden kann. Das Beaufschlagen des Kolbens 16 mit dem hydraulischen Druck generiert einen Abziehdruck derart, dass das Lagerbefestigungssystem 1 die Lagereinheit 2 über die Koppelverbindung der Ringmutter 22 mit der Lagereinheit 2 von dem Zapfen 3 der Walze 4 abzieht und somit der Anfangszustand, wie in Figur 1 gezeigt, erreicht wird.

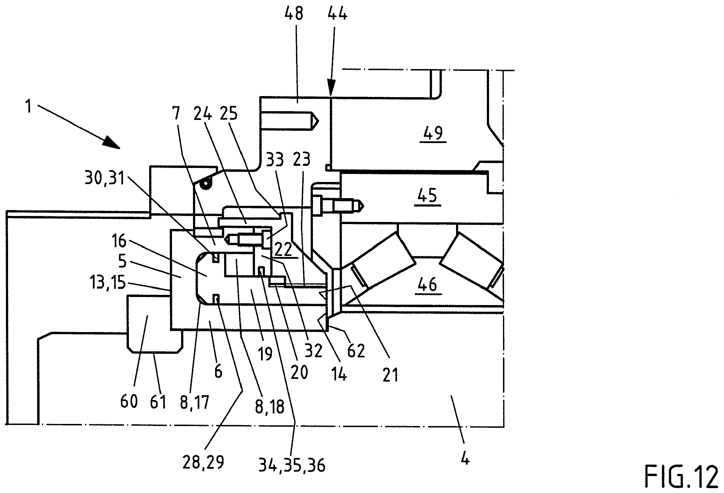

In Figur 12 ist eine zweite Ausführungsvariante des erfindungsgemäßen Lagerbefestigungssystems 1 gezeigt. Im Unterschied zu der ersten Ausführungsvariante wird das Lagerbefestigungssystem 1 über einen separat ausgebildeten Haltebügel 60, der an dem ersten Ende 13 des Zylindergehäuses 5 in einer umfangsseitig verlaufenden Nut 61 der Walze 4 angeordnet ist, und einer Anschlagsfläche 62 der Walze 4 verschiebesicher auf der Walze 4 fixiert. In dieser Ausführungsvariante kann auf den Druckring 37 verzichtet werden.

### Bezugszeichenliste

- 1: Lagerbefestigungssystem
- 2: Lagereinheit
- 3: Zapfen
- 4: Walze
- 5: Zylindergehäuse
- 6: innere Mantelwand
- 7: äußere Mantelwand
- 8: Innenraum
- 9: Innenseite der inneren Mantelwand
- 10: Außenseite der inneren Mantelwand
- 11: Innenseite der äußeren Mantelwand
- 12: Außenseite der äußeren Mantelwand
- 13: erstes Ende
- 14: zweites Ende
- 15: Bodenelement
- 16: Kolben
- 17: erste Kammer
- 18: zweite Kammer
- 19: Kolbenstange
- 20: Außengewinde
- 21: freies Ende des Kolbens / Kolbenstange
- 22: Ringmutter
- 23: Innengewinde
- 24: zylinderförmiges Element
- 25: flanschartige Ringfläche
- 26: Koppelelement
- 27: Abziehring
- 28: Innenringdichtung
- 29: Nut
- 30: Außenringdichtung
- 31: Nut
- 32: Zylinderabschlussdeckel
- 33: Schraubverbindung
- 34: Innenseite Zylinderabschlussdeckel
- 35: Nut
- 36: Ringdichtung
- 37: Druckring
- 38: Koppelmechanismus
- 39: Bajonettelement
- 40: Vertiefung
- 41: Bajonettring
- 42: Baugruppe
- 43: Axiallagereinheit
- 44: Abschlussdeckel
- 45: Axiallagergehäuse
- 46: Axiallager
- 47: Schraubverbindung
- 48: erstes Element
- 49: zweites Element
- 50: Druckschulterring
- 51: Zapfen-Lager-Buchsen-Einheit
- 52: Zapfenbuchse
- 53: Lagerbuchse
- 54: Einbaustück
- 55: Flansch
- 56: Flansch
- 57: Anschlagsfläche
- 58: Sicherungssegmente
- 59: radialer Schlitz
- 60: Haltebügel
- 61: Nut
- 62: Anschlagsfläche
- 63: Haltesegment
- R: axiale Richtung

## Patentansprüche

1. Lagerbefestigungssystem (1) zum Aufziehen, Halten und Abziehen von zumindest einer Lagereinheit (2) auf einem konisch ausgebildeten Zapfen (3) einer Walze (4), aufweisend;
ein ringförmig ausgebildetes Zylindergehäuse (5) mit einem von einer inneren Mantelwand (6) und von einer äußeren Mantelwand (7) begrenztem ringförmigen Innenraum (8), wobei das Zylindergehäuse (5) ein erstes und ein axial gegenüberliegend angeordnetes zweites Ende (13, 14) umfasst; einen in dem Innenraum (8) des Zylindergehäuses (5) axial verschiebbar gelagerten ringförmig ausgebildeten Kolben (16), der den Innenraum (8) des Zylindergehäuses (5) in eine erste und eine zweite Kammer (17, 18) unterteilt, über die der Kolben (16) jeweils mit einem Druck beaufschlagbar ist, derart, dass die Lagereinheit (2) über eine Druckbeaufschlagung des Kolbens (16) auf den konisch ausgebildeten Zapfen (3) der Walze (4) auf- oder abziehbar ist, wobei der Kolben (16) an seiner Kolbenstange (19) ein Außengewinde (20) aufweist, das mit einem Innengewinde (23) einer koaxial zu dem ringförmigen Kolben (16) angeordneten Ringmutter (22) in Eingriff steht, derart, dass die Ringmutter (22) über eine Druckbeaufschlagung des Kolbens (16) axial verfahrbar ist, wobei die Ringmutter (22) außenseitig eine flanschartige Ringfläche (25) aufweist, die über ein Koppelelement (26) mit einem Abziehring (27) der Lagereinheit (2) koppelbar ist, und wobei das Zylindergehäuse (5) an der Außenseite (10) der inneren Mantelwand (6) einen Koppelmechanismus (38) umfasst, über den das Zylindergehäuse (5) verschiebesicher mit dem Zapfen (3) der Walze (4) koppelbar ist.

2. Lagerbefestigungssystem (1) nach Anspruch 1, wobei der in dem Innenraum (8) des Zylindergehäuses (5) axial verschiebbar gelagerte ringförmig ausgebildete Kolben (16) zumindest eine Innenringdichtung (28) zum Abdichten des Kolbens (16) gegenüber der inneren Mantelwand (6) des Zylindergehäuses (5) und zumindest eine Außenringdichtung (30) zum Abdichten des Kolbens (16) gegenüber der äußeren Mantelwand (7) des Zylindergehäuses (5) aufweist.

3. Lagerbefestigungssystem (1) nach Anspruch 1 oder 2, wobei der Innenraum (8) des Zylindergehäuses (5) ringmutterseitig von einem ringförmigen Zylinderabschlussdeckel (32) verschlossen ist.

4. Lagerbefestigungssystem (1) nach Anspruch 3, wobei der Zylinderabschlussdeckel (32) an einem freien Ende, insbesondere der Stirnseite, der äußeren Mantelwand (7) des Zylindergehäuses (5), vorzugsweise lösbar, angeordnet ist.

5. Lagerbefestigungssystem (1) nach Anspruch 4, wobei der ringförmige Zylinderabschlussdeckel (32) an seiner Innenseite (34) zumindest eine in zumindest einer Nut (35) angeordnete Ringdichtung (36) zum Abdichten des Zylinderabschlussdeckels (32) gegen den Kolben (16), insbesondere gegen die Kolbenstange (19), und/oder der Kolben (16), insbesondere die Kolbenstange (19), an seiner Außenseite zumindest eine in zumindest einer Nut angeordnete Ringdichtung zum Abdichten gegen den Zylinderabschlussdeckel (32) aufweist.

6. Lagerbefestigungssystem (1) nach einem der vorhergehenden Ansprüche, wobei die Ringmutter (22) ein zylinderförmiges Element (24) umfasst, das sich axial in Richtung des ersten Endes (13) des Zylindergehäuses (5) erstreckt und die äußere Mantelwand (7) des Zylindergehäuses (5) außenseitig zumindest teilweise koaxial umgibt.

7. Lagerbefestigungssystem (1) nach einem der vorhergehenden Ansprüche, weiterhin umfassend einen am zweiten Ende (14) des Zylindergehäuses (5) angeordneten Druckring (37) über den die Druckkraft des Kolbens (16) auf die Lagereinheit (2) übertragbar ist.

8. Lagerbefestigungssystem (1) nach Anspruch 7, wobei der Druckring (37) in Form eines separaten Bauteils oder als Bestandteil des Kolbens (16) ausgebildet ist.

9. Lagerbefestigungssystem (1) nach einem der vorhergehenden Ansprüche, wobei der Koppelmechanismus (38) in Form eines Bajonettsystems ausgebildet ist.

10. Baugruppe (42) umfassend ein Lagerbefestigungssystem (1) nach einem der vorhergehenden Ansprüche 1 bis 9, und eine mit dem Lagerbefestigungssystem (1) verbundene Lagereinheit (2).

11. Baugruppe (42) nach Anspruch 10, wobei die Lagereinheit (2) eine Axiallagereinheit (43) mit einem Abziehring (27) umfasst, über den die Lagereinheit (2) für den Abziehprozess mittels eines Koppelelements (26) mit der Ringmutter (22) temporär koppelbar ist.

12. Baugruppe (42) nach Anspruch 11, wobei der Abziehring (27) umfangsseitig zumindest zwei, vorzugsweise mehrere, radiale Schlitze (59) umfasst, in die die Koppelelemente (26) radial einschiebbar sind.

13. Baugruppe (42) nach Anspruch 11 oder 12, wobei die Lagereinheit (2) einen Druckschulterring (50), eine Zapfen-Lager-Buchsen-Einheit (51) sowie ggf. ein Einbaustück (54) umfasst.

14. Verfahren zum Aufziehen von zumindest einer Lagereinheit (2) auf einem konisch ausgebildeten Zapfen (3) einer Walze (4) mittels eines Lagerbefestigungssystem (1) nach einem der Ansprüche 1 bis 9, aufweisend die folgenden Schritte:
Vormontage einer Lagereinheit (2) mit einem vormontierten Lagerbefestigungssystem (1) zu einer Baugruppe (42) oder bereitstellen einer Baugruppe (42) nach einem der Ansprüche 10 bis 13;
Ausrichten und Aufschieben der Baugruppe (42) auf den Zapfen (3) der Walze (4);
Koppeln des Lagerbefestigungssystems (1) mit dem Zapfen (3) der Walze (4), so dass dieses verschiebesicher mit dem Zapfen (3) der Walze (4) verbunden wird; und
Beaufschlagen des Kolbens (16) mit einem Aufziehdruck, derart, dass dieser ggf. über den Druckring (37) die Lagereinheit (2) auf den konisch ausgebildeten Zapfen (3) der Walze (4) aufzieht.

15. Verfahren nach Anspruch 14, wobei bei noch anhaltender Druckbeaufschlagung des Kolbens (16) die Ringmutter (22) in Richtung des ersten Endes (13) des Zylindergehäuses (5) ggf. bis zu einer Anschlagsfläche (57) des Zylinderabschlussdeckels (32) zurückgedreht, anschließend drehfest gesichert und sodann der Kolben (16) druckentlastet wird.

16. Verfahren zum Abziehen von zumindest einer auf einem konisch ausgebildeten Zapfen (3) einer Walze (4) installierten Lagereinheit (2) mittels eines Lagerbefestigungssystems (1) nach einem der Ansprüche 1 bis 9, wobei das Lagerbefestigungssystem (1) mit der Lagereinheit (2) als Baugruppe (42) auf dem Zapfen (3) der Walze (4) installiert ist, derart, dass die Lagereinheit (2) von dem Lagerbefestigungssystem (1) in Position gehalten wird, aufweisend die folgenden Schritte:
Beaufschlagen des Kolbens (16) mit einem Fixierdruck, derart, dass dieser ggf. über den Druckring (37) die Lagereinheit (2) auf den konisch ausgebildeten Zapfen (3) der Walze (4) fixiert;
ggf. Entsichern der Ringmutter (22) und verdrehen dieser in Richtung der Lagereinheit (2), ggf. bis zu einer Anschlagsfläche der Lagereinheit (2);
Druckentlasten des Kolbens (16), indem die Druckbeaufschlagung beendet wird;
ggf. Entkoppeln des Lagerbefestigungssystems (1) von dem Zapfen (3) der Walze (4);
Koppeln der Lagereinheit (2) über ein Koppelelement (26) mit der Ringmutter (22) des Lagerbefestigungssystems (1); und
Beaufschlagen des Kolbens (16) mit einem Abziehdruck derart, dass das Lagerbefestigungssystem (1) die Lagereinheit (2) über die Koppelverbindung der Ringmutter (22) mit der Lagereinheit (2) von dem Zapfen (3) der Walze (4) abzieht; und
ggf. Entkoppeln des Lagerbefestigungssystems (1) von dem Zapfen (3) der Walze (4).

## Claims

1. Bearing securing system (1) for drawing-on, holding and drawing-off at least one bearing unit (2) on a conically formed journal (3) of a roll (4), comprising:
an annularly formed cylinder housing (5) with an annular interior space (8) bounded by an inner circumferential wall (6) and by an outer circumferential wall (7), wherein the cylinder housing (5) has a first and an axially oppositely arranged second end (13, 14);
an annular piston (16), which is mounted in the interior space (8) of the cylinder housing (5) to be axially displaceable and which divides the interior space (8) of the cylinder housing (5) into a first and a second chamber (17, 18), by way of which the piston (16) is respectively loadable with a pressure in such a way that the bearing unit (2) by way of pressure-loading of the piston (16) can be drawn onto or drawn off the conically formed journal (3) of the roll (4), wherein the piston (16) has at its piston rod (19) an external thread (20) which is in engagement in such a way with an internal thread (23) of a ring nut (22) arranged coaxially with respect to the annular piston (16) that the ring nut (22) is axially movable by way of pressure-loading of the piston (16), wherein the ring nut (22) has on the outer side a flange-like ring surface (25) which can be coupled with a drawing-off ring (27) of the bearing unit (2) by way of a coupling element (26), and wherein the cylinder housing (5) has at the outer side (10) of the inner circumferential wall (6) a coupling mechanism (38) by way of which the cylinder housing (5) can be coupled with the journal (3) of the roll (4) to be secure against displacement.

2. Bearing securing system (1) according to claim 1, wherein the annular piston (16) mounted in the interior space (8) of the cylinder housing (5) to be axially displaceable has at least one inner ring seal (28) for sealing of the piston (16) relative to the inner circumferential wall (6) of the cylinder housing (5) and at least one outer ring seal (30) for sealing the piston (16) relative to the outer circumferential wall (7) of the cylinder housing (5).

3. Bearing securing system (1) according to claim 1 or 2, wherein the interior space (8) of the cylinder housing (5) is closed at the ring nut side by an annular cylinder closure cover (32).

4. Bearing securing system (1) according to claim 3, wherein the cylinder closure cover (32) is arranged, preferably detachably, at a free end, particularly the end face, of the outer circumferential wall (7) of the cylinder housing (5).

5. Bearing securing system (1) according to claim 4, wherein the annular cylinder closure cover (32) has at its inner side (34) at least one ring seal (36), which is arranged in at least one groove (35), for sealing the cylinder closure cover (32) relative to the piston (16), particularly relative to the piston rod (19), and/or the piston (16), particularly the piston rod (19), has at its outer side at least one ring seal, which is arranged in at least one groove, for sealing relative to the cylinder closure cover (32).

6. Bearing securing system (1) according to any one of the preceding claims, wherein the ring nut (22) comprises a cylindrical element (24) which extends axially in the direction of the first end (13) of the cylinder housing (5) and at least partly coaxially surrounds the outer circumferential wall (7) of the cylinder housing (5) at the outer side.

7. Bearing securing system (1) according to any one of the preceding claims, further comprising a pressure ring (37) which is arranged at the second end (14) of the cylinder housing (5) and by way of which the pressure force of the piston (16) is transmissible to the bearing unit (2).

8. Bearing securing system (1) according to claim 7, wherein the pressure ring (37) is constructed in the form of a separate component or as a constituent of the piston (16).

9. Bearing securing system (1) according to any one of the preceding claims, wherein the coupling mechanism (38) is constructed in form of a bayonet system.

10. Subassembly (42) comprising a bearing securing system (1) according to any one of the preceding claims 1 to 9, and a bearing unit (2) connected with the bearing securing system (1).

11. Subassembly (42) according to claim 10, wherein the bearing unit (2) comprises an axial bearing unit (43) with a drawing-off ring (27) by way of which the bearing unit (2) can be temporarily coupled with the ring nut (22) by means of a coupling element (26) for the drawing-off process.

12. Subassembly (42) according to claim 11, wherein the drawing-off ring (27) has at the circumferential side at least two, preferably more, radial slots (59) into which the coupling elements (26) are radially displaceable.

13. Subassembly (42) according to claim 11 or 12, wherein the bearing unit (2) comprises a pressure shoulder ring (50), a journal bearing bush unit (51) and optionally a chock (54).

14. Method of drawing at least one bearing unit (2) onto a conically formed journal (3) of a roll (4) by means of a bearing securing system (1) according to any one of claims 1 to 9, comprising the following steps:
pre-mounting a bearing unit (2) with a pre-mounted bearing securing system (1) to form a subassembly (42) or providing a subassembly (42) according to any one of claims 10 to 13;
aligning and pushing the subassembly (42) onto the journal (3) of the roll (4);
coupling the bearing securing system 91) to the journal (3) of the roll (4) so that this is connected with the journal (3) of the roll (4) to be secure against displacement; and
loading the piston (16) with a drawing-on pressure in such a way this optionally by way of the pressure ring (37) draws the bearing unit (2) onto the conically formed journal (3) of the roll (4).

15. Method according to claim 14, wherein in the case of continuing pressure-loading of the piston (16) the ring nut (22) is rotated back in the direction of the first end (13) of the cylinder housing (5) optionally up to an abutment surface (57) of the cylinder closure cover (32) and subsequently secured against relative rotation and then the piston (16) is relieved of pressure.

16. Method of drawing-off at least one bearing unit (2), which is installed on a conically formed journal (3) of a roll (4), by means of a bearing securing system (1) according to any one of claims 1 to 9, wherein the bearing securing system (1) together with the bearing unit (2) is installed as a subassembly (42) on the journal (3) of the roll (4) in such a way that the bearing unit (2) is held in position by the bearing securing system (1), comprising the following steps:
loading the piston (16) with a fixing pressure in such a way that this optionally by way of the pressure ring (37) fixes the bearing unit (2) on the conically formed journal (3) of the roll (4);
optionally releasing the ring nut (22) and rotating this in the direction of the bearing unit (2), optionally up to an abutment surface of the bearing unit (2);
relieving the piston (16) of pressure in that the pressure loading is terminated;
optionally decoupling the bearing securing system 91) from the journal (3) of the roll (4);
coupling the bearing unit (2) by way of a coupling element (26) to the ring nut (22) of the bearing securing system (1); and
loading the piston (16) with a drawing-off pressure in such a way that the bearing securing system (2) draws the bearing unit (2) off the journal (3) of the roll (4) by way of the coupling connection of the ring nut (22) with the bearing unit (2); and
optionally decoupling the bearing securing system (1) from the journal (3) of the roll (4).

## Revendications

1. Système de fixation de roulement (1) pour monter, maintenir et retirer au moins une unité de roulement (2) sur une broche conique (3) d'un rouleau (4), comprenant ;
un boîtier cylindrique (5) de forme annulaire avec un espace intérieur annulaire (8) délimité par une paroi interne (6) et une paroi externe (7), le boîtier cylindrique (5) comprenant une première et une deuxième extrémité (13, 14) disposées axialement à l'opposé ; un piston annulaire (16) monté de manière à pouvoir se déplacer axialement dans l'espace intérieur (8) du boîtier cylindrique (5), qui divise l'espace intérieur (8) du boîtier cylindrique (5) en une première et une deuxième chambre (17, 18), sur lesquelles le piston (16) peut être soumis à une pression, de telle sorte que l'unité de roulement (2) peut être montée ou retirée sur la broche conique (3) du rouleau (4) par une pression appliquée sur le piston (16), le piston (16) ayant un filetage extérieur (20) sur sa tige de piston (19), qui est en prise avec un filetage intérieur (23) d'un écrou annulaire (22) disposé coaxialement par rapport au piston annulaire (16), de telle sorte que l'écrou annulaire (22) peut être déplacé axialement par une pression appliquée sur le piston (16), l'écrou annulaire (22) ayant sur son côté extérieur une surface annulaire (25) de type bride qui peut être couplée à une bague de retrait (27) de l'unité de roulement (2) par un élément de couplage (26), et le boîtier cylindrique (5) comprenant sur le côté extérieur (10) de la paroi interne (6) un mécanisme de couplage (38), par lequel le boîtier cylindrique (5) peut être couplé de manière à ne pas pouvoir glisser avec la broche (3) du rouleau (4).

2. Système de fixation de roulement (1) selon la revendication 1, le piston annulaire (16) monté de manière à pouvoir se déplacer axialement dans l'espace intérieur (8) du boîtier cylindrique (5) ayant au moins un joint torique interne (28) pour étanchéifier le piston (16) par rapport à la paroi interne (6) du boîtier cylindrique (5) et au moins un joint torique externe (30) pour étanchéifier le piston (16) par rapport à la paroi externe (7) du boîtier cylindrique (5).

3. Système de fixation de roulement (1) selon la revendication 1 ou 2, l'espace intérieur (8) du boîtier cylindrique (5) étant fermé du côté de l'écrou annulaire par un couvercle de cylindre (32) annulaire.

4. Système de fixation de roulement (1) selon la revendication 3, le couvercle de cylindre (32) étant disposé, de préférence de manière amovible, à une extrémité libre, en particulier sur le côté frontal, de la paroi externe (7) du boîtier cylindrique (5).

5. Système de fixation de roulement (1) selon la revendication 4, le couvercle de cylindre (32) annulaire ayant sur son côté intérieur (34) au moins un joint torique (36) disposé dans au moins une rainure (35) pour étanchéifier le couvercle de cylindre (32) par rapport au piston (16), en particulier par rapport à la tige de piston (19), et/ou le piston (16), en particulier la tige de piston (19), ayant sur son côté extérieur au moins un joint torique disposé dans au moins une rainure pour étanchéifier par rapport au couvercle de cylindre (32).

6. Système de fixation de roulement (1) selon l'une quelconque des revendications précédentes, l'écrou annulaire (22) comprenant un élément (24) de forme cylindrique qui s'étend axialement en direction de la première extrémité (13) du boîtier cylindrique (5) et qui entoure au moins partiellement de manière coaxiale le côté extérieur de la paroi externe (7) du boîtier cylindrique (5).

7. Système de fixation de roulement (1) selon l'une quelconque des revendications précédentes, comprenant en outre une bague de pression (37) disposée à la deuxième extrémité (14) du boîtier cylindrique (5) par laquelle la force de pression du piston (16) peut être transmise à l'unité de roulement (2).

8. Système de fixation de roulement (1) selon la revendication 7, la bague de pression (37) étant conçue sous la forme d'un composant séparé ou comme une partie du piston (16).

9. Système de fixation de roulement (1) selon l'une quelconque des revendications précédentes, le mécanisme de couplage (38) étant conçu sous la forme d'un système de baïonnette.

10. Ensemble (42) comprenant un système de fixation de roulement (1) selon l'une quelconque des revendications 1 à 9, et une unité de roulement (2) reliée au système de fixation de roulement (1).

11. Ensemble (42) selon la revendication 10, l'unité de roulement (2) comprenant une unité de roulement axial (43) avec une bague de retrait (27), par laquelle l'unité de roulement (2) peut être temporairement couplée à l'écrou annulaire (22) pour le processus de retrait au moyen d'un élément de couplage (26).

12. Ensemble (42) selon la revendication 11, la bague de retrait (27) comprenant sur son côté circonférentiel au moins deux, de préférence plusieurs, fentes radiales (59) dans lesquelles les éléments de couplage (26) peuvent être insérés radialement.

13. Ensemble (42) selon la revendication 11 ou 12, l'unité de roulement (2) comprenant une bague d'épaulement de pression (50), une unité de douille de roulement de broche (51) et éventuellement une pièce d'insertion (54).

14. Procédé pour monter au moins une unité de roulement (2) sur une broche conique (3) d'un rouleau (4) au moyen d'un système de fixation de roulement (1) selon l'une quelconque des revendications 1 à 9, comprenant les étapes suivantes :
pré-assemblage d'une unité de roulement (2) avec un système de fixation de roulement (1) préassemblé pour former un ensemble (42) ou fourniture d'un ensemble (42) selon l'une quelconque des revendications 10 à 13 ;
alignement et glissement de l'ensemble (42) sur la broche (3) du rouleau (4) ;
couplage du système de fixation de roulement (1) avec la broche (3) du rouleau (4), de sorte qu'il est relié de manière à ne pas pouvoir glisser avec la broche (3) du rouleau (4) ; et
application d'une pression de montage sur le piston (16), de telle sorte que celui-ci, éventuellement par l'intermédiaire de la bague de pression (37), monte l'unité de roulement (2) sur la broche conique (3) du rouleau (4).

15. Procédé selon la revendication 14, où, alors que la pression est toujours appliquée sur le piston (16), l'écrou annulaire (22) est tourné en direction de la première extrémité (13) du boîtier cylindrique (5), éventuellement jusqu'à une surface d'arrêt (57) du couvercle de cylindre (32), puis est sécurisé de manière à ne pas pouvoir tourner, et ensuite le piston (16) est dépressurisé.

16. Procédé pour retirer au moins une unité de roulement (2) installée sur une broche conique (3) d'un rouleau (4) à l'aide d'un système de fixation de roulement (1) selon l'une quelconque des revendications 1 à 9, le système de fixation de roulement (1) étant installé avec l'unité de roulement (2) en tant qu'ensemble (42) sur la broche (3) du rouleau (4) de telle sorte que l'unité de roulement (2) est maintenue en position par le système de fixation de roulement (1), comprenant les étapes suivantes :
appliquer une pression de fixation sur le piston (16), de telle sorte que celui-ci, éventuellement par l'intermédiaire de la bague de pression (37), fixe l'unité de roulement (2) sur la broche conique (3) du rouleau (4) ;
éventuellement, déverrouiller l'écrou annulaire (22) et le tourner en direction de l'unité de roulement (2), éventuellement jusqu'à une surface d'arrêt de l'unité de roulement (2) ;
dépressuriser le piston (16), en mettant fin à l'application de la pression ;
éventuellement, découpler le système de fixation de roulement (1) de la broche (3) du rouleau (4) ;
coupler l'unité de roulement (2) à l'écrou annulaire (22) du système de fixation de roulement (1) par l'intermédiaire d'un élément de couplage (26) ; et
appliquer une pression de retrait sur le piston (16) de telle sorte que le système de fixation de roulement (1) retire l'unité de roulement (2) de la broche (3) du rouleau (4) par l'intermédiaire de la connexion de couplage de l'écrou annulaire (22) avec l'unité de roulement (2) ; et
éventuellement, découpler le système de fixation de roulement (1) de la broche (3) du rouleau (4).
